# FASCICULE DE BREVET EUROPEEN

(11) **EP 2 863 100 B1**
(45) Date de publication et mention de la délivrance du brevet: **10.05.2017**
(21) Numéro de dépôt: 14187501.3
(22) Date de dépôt: 02.10.2014
(51) Int. Cl.: F16L 27/02, A62C 31/02, F16L 27/073

(54) **Joint articulé d'une conduite de fluide, double joint articulé et canon à eau comprenant le joint et le double joint**
Gelenkverbindung einer Flüssigkeitsleitung, Doppelgelenk und Wasserwerfer, der diese Verbindung und die Doppelverbindung umfasst
Swivel joint of a fluid line, double swivel joint and water gun comprising the joint and the double joint

(30) Priorité: 16.10.2013 FR 1360071
(43) Date de publication de la demande: 22.04.2015
(73) Titulaire: POK, 10401 Nogent sur Seine Cedex (FR)
(72) Inventeur: Fevre, Jean-Michel, 10400 NOGENT SUR SEINE (FR)
(74) Mandataire: Debay, Yves

(56) Documents cités:
- WO-A1-92/04943
- FR-A- 576 014
- FR-A1- 2 805 881

## Description

La présente invention se rapporte au domaine des conduites de fluide et plus particulièrement à un joint articulé d'une conduite de fluide.

Dans le domaine de conduites de fluide telles que les lances d'incendie, il est important de pourvoir contrôler la direction du fluide projeté tel que de l'eau. Les lances d'incendie sont généralement utilisées avec de l'eau circulant sous pression ce qui peut rendre la manipulation de la lance d'incendie difficile, en particulier pour contrôler la direction de l'eau projetée.

La présente invention se propose de palier un ou plusieurs inconvénients de l'art antérieur et notamment de proposer une solution qui permette de contrôler la direction d'un fluide tout en gardant une compacité de la lance et de la conduite.

Le brevet FR 280 58 81 propose un joint articulé d'une conduite de fluide. Ce joint comprend une douille dans laquelle est disposée une rotule qui peut se déplacer à l'intérieur de la rotule. Un tourillon relie la rotule et la douille pour permettre un mouvement relatif de pivotement entre elles. La rotule comporte un orifice situé centralement sur la rotule qui coopère avec un orifice défini dans la douille pour définir un conduit de passage de fluide à travers le joint. Cependant, ce joint est peu fiable car la liaison qui relie la douille et la rotule peut être source de fuite. De plus, la liaison peut provoquer des turbulences dans le fluide par la présence du tourillon proche du chemin de passage du fluide.

Le document FR 576 014 enseigne un système de joint à rotules mâle et femelle concentrique et à garnitures métalliques. Ce système permet de contrôler la direction d'un fluide projeté mais sa structure peut poser des problèmes de fiabilité en ce qui concerne l'étanchéité. De plus, ce système possède des couples de manoeuvre importants qui ne facilitent pas la manipulation du système.

Cet objectif est atteint grâce à un joint articulé d'une conduite de fluide comprenant au moins :
- une douille comportant un passage de fluide la traversant parallèlement à son axe longitudinal et se prolongeant sur une extrémité à l'intérieur par une forme accueillant le diamètre d'une rotule,
- la rotule disposée dans la douille de façon à ce que la rotule puisse se déplacer en rotation dans la douille, la rotule comportant un passage de fluide la traversant parallèlement à son axe longitudinal,
le passage de fluide de la douille et le passage de fluide de la rotule coopérant pour définir un passage de fluide à travers le joint quelles que soient leurs orientations respectives,
le joint étant caractérisé en ce qu'il comprend en outre :
- un système d'étanchéité disposé dans un plan diamétral du volume intérieur de la douille,
- au moins une première biellette fixée solidairement selon une direction sur une portion située dans le prolongement de la rotule, la première biellette s'articulant en rotation sur un premier pivot formé sur une extrémité de la douille pour réaliser une première liaison pivot.

Selon une autre particularité, la douille est en amont de la rotule dans le sens de circulation du fluide.

Selon une autre particularité, la douille est en aval de la rotule dans le sens de circulation du fluide.

Selon une autre particularité, le plan diamétral passe par le centre de la rotule.

Selon une autre particularité, le joint comprend une deuxième biellette fixée solidairement selon une direction sur une portion située dans le prolongement de la rotule, la deuxième biellette s'articulant en rotation sur un deuxième pivot formé sur une extrémité de la douille pour réaliser une deuxième liaison pivot, le deuxième pivot étant aligné coaxialement avec le premier pivot, le deuxième pivot étant diamétralement opposé au premier pivot.

Selon une autre particularité, la première et/ou la deuxième liaison pivot est un tenon formé sur la douille.

Selon une autre particularité, la première et/ou la deuxième liaison pivot est un tourillon.

Selon une autre particularité, la première et/ou la deuxième liaison pivot sont un ou des trous borgnes formés dans la douille recevant un ou des tenons formé sur au moins une biellette.

L'invention concerne égalent un double joint articulé pour conduite de fluide, comprenant un conduit, caractérisé en ce qu'il comprend :
- une première douille comprenant un passage de fluide la traversant parallèlement à son axe longitudinal,
- un système d'étanchéité disposé dans un plan diamétral du volume intérieur de la première douille,
- la première rotule disposée dans la première douille de façon à ce que la première rotule puisse se déplacer en rotation dans la première douille, la première rotule comprenant un passage de fluide la traversant parallèlement à son axe longitudinal,
- une deuxième douille comprenant un passage de fluide la traversant parallèlement à son axe longitudinal,
- un système d'étanchéité disposé dans un plan diamétral du volume intérieur de la deuxième douille,
- la deuxième rotule disposée dans la deuxième douille de façon à ce que la deuxième rotule puisse se déplacer en rotation dans la deuxième douille, la deuxième rotule comprenant un passage de fluide la traversant parallèlement à son axe longitudinal,
les passages de fluide de la première et de la deuxième douille et les passages de fluide de la première rotule et de la deuxième rotule coopérant entre eux pour définir un passage de fluide à travers le joint quelles que soient leurs orientations respectives,
au moins un premier ensemble comprenant une ou plusieurs biellettes fixées solidairement selon une direction sur une portion située dans le prolongement de la première rotule, la ou les biellettes s'articulant en rotation sur un ou plusieurs pivots formés sur une extrémité de la première douille pour réaliser une ou plusieurs liaison pivot,
au moins un deuxième ensemble comprenant une ou plusieurs biellettes fixées solidairement selon une direction sur une portion située dans le prolongement de la deuxième rotule, la ou les biellettes s'articulant en rotation sur un ou plusieurs pivots formés sur une extrémité de la deuxième douille pour réaliser une ou plusieurs liaison pivot,
le ou les premiers pivots définissant un axe de rotation sensiblement perpendiculaire à un axe de rotation défini par le ou les deuxièmes pivots.

Selon une autre particularité, la première rotule et la deuxième rotule sont solidaires entre elles ou réalisées en une seule pièce de telle manière que les têtes de rotule sont dans des sens opposés.

Selon une autre particularité, la première douille et la deuxième rotule sont solidaires entre elles ou réalisées en une seule pièce de telle manière que les têtes de rotule sont dans le même sens.

Selon une autre particularité, la première douille et la deuxième douille sont solidaires entre elles et tête-bêche et accueillent chacune à l'extrémité libre une rotule à l'intérieur et comportent chacune deux tenons ou trous borgnes, la paire de tenons ou trous borgnes d'une douille étant disposée selon une direction perpendiculaire à la paire de tenons ou de trous borgnes de l'autre douille.

Selon une autre particularité, le plan diamétral du volume intérieur de la première douille et/ou le plan diamétral du volume intérieur de la deuxième douille passe respectivement par le centre de la première rotule et/ou de la deuxième rotule.

L'invention concerne également un canon à eau de type monitor ayant au moins un double joint de sortie selon l'invention.

Selon une autre particularité, la ou les premières liaisons définissent un axe de rotation horizontal.

Selon une autre particularité, la ou les premières liaisons définissent un axe de rotation vertical.

L'invention, avec ses caractéristiques et avantages, ressortira plus clairement à la lecture de la description faite en référence aux dessins annexés dans lequel :
- La figure 1 représente une coupe d'une vue en perspective du joint articulé selon un premier mode de réalisation dans une configuration,
- la figure 2 représente une coupe d'une vue en perspective du joint articulé selon le premier mode de réalisation dans une autre configuration,

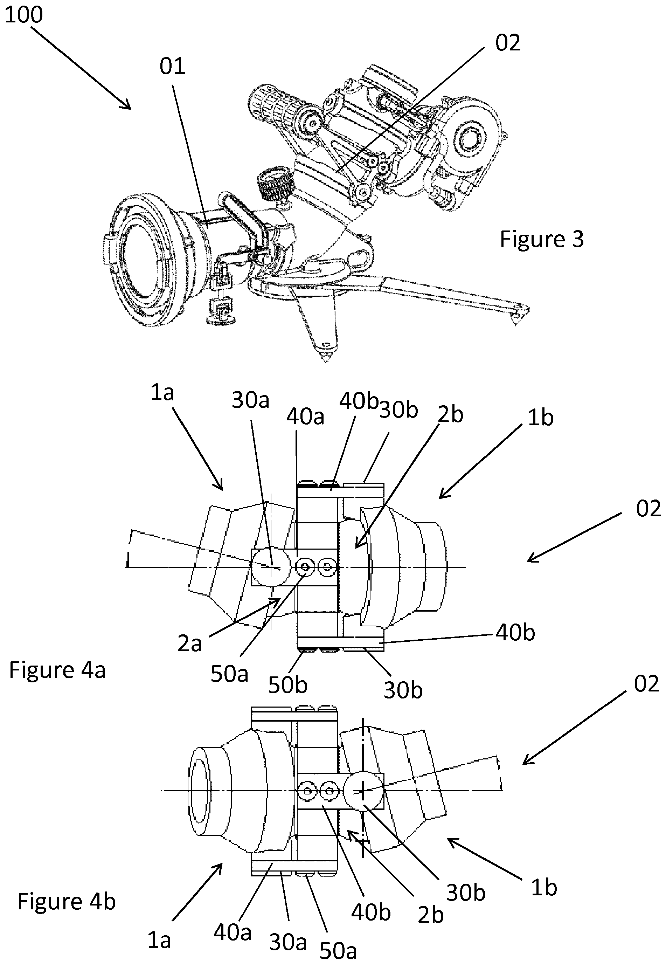

- la figure 3 représente une vue en perspective une connexion articulée d'un canon à eau dans laquelle est utilisé un joint articulé,
- la figure 4a une vue de profil du joint articulé,
- la figure 4b représente une autre vue de profil du joint articulé,
- la figure 5 représente une vue en perspective du joint articulé selon un deuxième mode de réalisation,
- la figure 6 représente une vue en perspective d'une coupe transversale du joint articulé selon le deuxième mode de réalisation,
- la figure 7 représente une vue en perspective du joint articulé selon le deuxième mode de réalisation,
- la figure 8 représente une vue en perspective du joint articulé selon un troisième mode de réalisation,
- la figure 9 représente une vue en perspective du joint articulé selon un quatrième mode de réalisation,
- la figure 10 représente une vue de profile en coupe selon une configuration du premier mode de réalisation.

L'invention va être décrite en référence aux figures précédemment citées.

L'invention concerne un joint articulé (01, 02) ou, autrement appelé, un joint pivotant.

Ce joint articulé (01, 02) est destiné à être placé dans une lance à incendie ou un canon à eau (100) entre un corps d'entrée de fluide, tel qu'une conduite de fluide, et un conduit pourvu d'une tête de diffusion destinée à projeter un fluide sous pression.

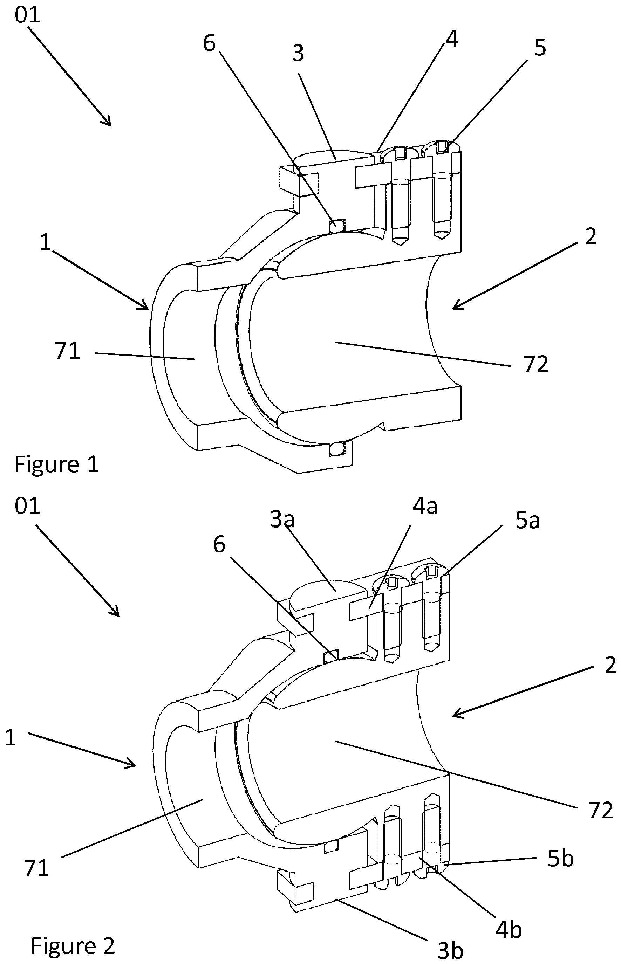

Dans un premier mode de réalisation représentée sur les figures 1, 2 et 10, le joint articulé (01) comprend au moins une douille (1) et une rotule (2) disposée dans la douille (1) de façon à ce que la rotule (2) puisse se déplacer en rotation dans la douille (1). Par exemple, la surface sphérique extérieure de la rotule (2) peut être ajustée à la surface sphérique intérieure de la douille (1).

La rotule (1) a une surface sphérique de diamètre constant s'étendant de part et d'autre du plan diamétral passant par le centre de la rotule.

La douille (1) comprend un passage (71) de fluide la traversant parallèlement à son axe longitudinal.

La rotule (2) comprend un passage (72) de fluide la traversant parallèlement à son axe longitudinal.

Le passage (71) de fluide de la douille (1) et le passage (72) de fluide de la rotule (2) coopèrent pour définir un conduit de fluide à travers le joint (01).

Le conduit de fluide permet le passage d'un fluide à travers le joint quelques soit l'orientation de la douille (1) par rapport à la rotule (2) disposée dans la douille (1).

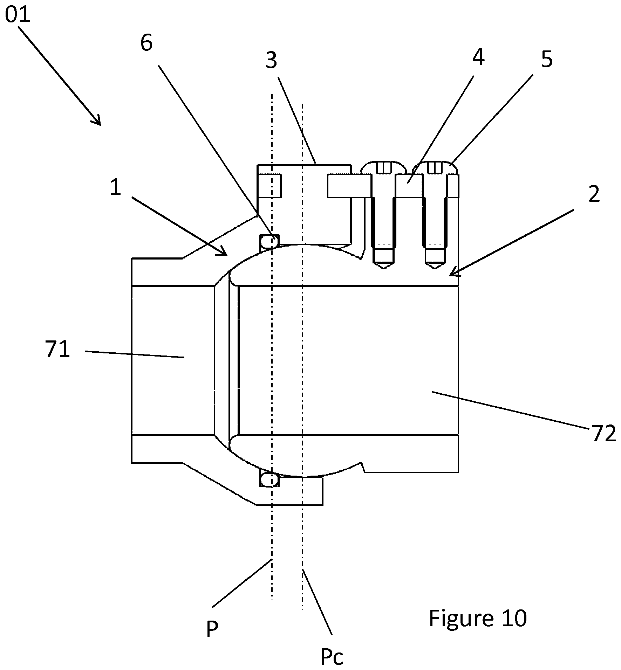

Le joint articulé (01) comprend en outre un système (6) d'étanchéité tel qu'une bague d'étanchéité disposé dans un plan (P) diamétral du volume intérieure de la douille (1). Par exemple, le plan (P) diamétral peut passer par le centre de la rotule (2). Le plan (P) diamétral peut aussi être décalé par rapport au centre de la rotule (2) (figure 10).

Par exemple, le système (6) d'étanchéité peut être inséré dans une gorge réalisée sur la surface interne de la douille (1). Le joint (6) d'étanchéité fait sailli hors de la gorge. La partie en sailli du joint (6) d'étanchéité peut alors entrer en contact avec la surface externe de la rotule (2) en créant une étanchéité.

Dans une première configuration du premier mode de réalisation, la rotule (2) est retenue dans la douille (1) à l'aide d'une première biellette (4a).

La première biellette (4a) est fixée solidairement selon une direction sur une portion située dans le prolongement de la rotule (2) par des moyens (5a) de fixation. Ces moyens (5a) de fixation peuvent être, par exemple, des vis.

La première biellette (4a) s'articule en rotation sur un premier pivot (3a) formé sur une extrémité de la douille (1) pour réaliser une première liaison pivot (3a). La première biellette (4a) peut s'articuler en rotation selon un axe de rotation défini par la liaison pivot (3a). L'axe de rotation est compris dans un plan (Pc) diamétral central passant par le centre de la rotule (2).

La première liaison pivot (3a) peut être, par exemple, un tourillon traversant la première biellette et la douille.

La première liaison pivot (3a) peut être, par exemple, un tenon agencé sur la douille (1). Le tenon fait une seule pièce avec la douille (1). Le tenon traverse la première biellette par un orifice agencé dans la première biellette (4a).

La première liaison pivot (3a) peut être, par exemple, un trou borgne qui accueille un tenon formé sur la première biellette (4a).

Dans une autre configuration, le joint articulé (01) peut comprendre une deuxième billette (4b) qui retient la rotule (2) dans la douille (1).

La deuxième biellette (4b) est fixée solidairement selon une direction sur une portion située dans le prolongement de la rotule (2) par des moyens (5a) de fixation. Ces moyens (5a) de fixation peuvent être, par exemple, des vis.

La deuxième biellette (4b) s'articule en rotation sur un deuxième pivot (3b) formé sur une extrémité de la douille (1) pour réaliser une deuxième liaison pivot (3b). La deuxième biellette (4b) peut s'articuler en rotation selon un axe de rotation défini par la liaison pivot (3b). L'axe de rotation est compris dans un plan (Pc) central passant par le centre de la rotule (2).

La deuxième liaison pivot (3b) peut être, par exemple, un tourillon traversant la deuxième biellette (3b) et la douille (1).

La deuxième liaison pivot (3b) peut être, par exemple, un tenon agencé sur la douille (1). Le tenon fait une seule pièce avec la douille (1). Le tenon traverse la deuxième biellette par un orifice agencé dans la deuxième biellette (4b).

La deuxième liaison pivot (3b) peut être, par exemple, un trou borgne qui accueille un tenon formé sur la deuxième biellette (4b).

La deuxième liaison pivot (3b) est alignée coaxialement à la première liaison pivot (3a) de telle manière que la rotule (2) possède un seul degré de liberté en rotation dans la douille (1). L'axe longitudinal de la rotule (2) peut ainsi faire un angle avec l'angle longitudinal de la douille (1).

Selon une configuration du premier mode de réalisation, lorsque le joint articulé (01) est monté sur une lance, la douille (1) est placée en amont de la rotule (2) dans le sens de circulation du fluide.

Selon une configuration du premier mode de réalisation, lorsque le joint articulé (01) est monté sur une lance, la douille (1) est placée en aval de la rotule (2) dans le sens de circulation du fluide.

Le joint articulé (01) selon le premier mode de réalisation peut être plus spécialement adaptée au joint articulé de sortie d'un canon à eau.

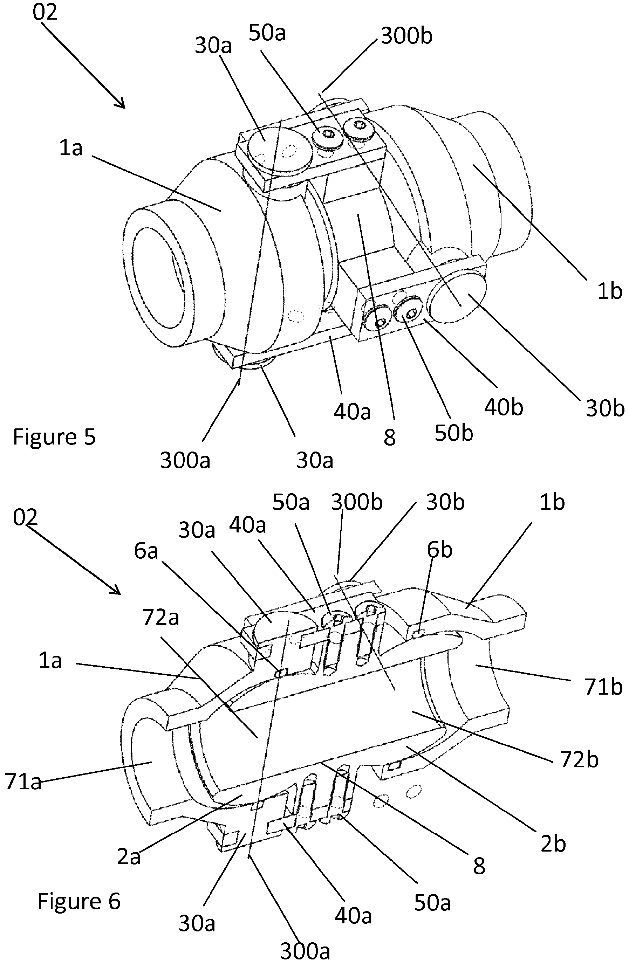

Dans un deuxième mode de réalisation représentée sur les figures 5, 6,7, 8 et 9, le joint articulé (02) forme un double joint articulé comprenant deux parties comprenant chacune une douille et une rotule agencées de la même manière que pour le joint articulé décrit ci-dessus. Chaque rotule a également une surface sphérique de diamètre constant s'étendant de part et d'autre du plan diamétral passant par le centre de la rotule considérée.

Dans une première configuration du deuxième mode de réalisation, deux rotules (2a, 2b) sont liées l'une à l'autre de telle manière que leurs axes longitudinaux se confondent. Les deux rotules (2a, 2b) sont opposées l'une de l'autre. Les deux rotules (2a, 2b) peuvent être fixées entre elles ou être réalisées d'une pièce en formant une double rotule ou soudées entre elles.

Ainsi, le joint articulé (02) comprend au moins une première douille (1 a), une première rotule (2a), une deuxième douille (1 b) et une deuxième rotule (2b).

La première douille (1a) comprend un passage (71 a) de fluide la traversant parallèlement à son axe longitudinal.

La première rotule (2a) est disposée dans la première douille (1a) de façon à ce que la première rotule (2a) puisse se déplacer en rotation dans la première douille (1a). La première rotule (2a) comprend un passage (72a) de fluide la traversant parallèlement à son axe longitudinal.

Un premier système (6a) d'étanchéité, tel qu'une bague d'étanchéité, est disposé dans un premier plan diamétral du volume intérieur de la première douille (1 a). Par exemple, le premier plan diamétral peut passer par le centre de la première rotule (2a). Le premier plan diamétral peut aussi être décalé par rapport au centre de la première rotule (2a).

La deuxième douille (1b) comprend un passage (71 b) de fluide la traversant parallèlement à son axe longitudinal.

La deuxième rotule (2b) est disposée dans la deuxième douille (1 b) de façon à ce que la deuxième rotule (2b) puisse se déplacer en rotation dans la deuxième douille (1 b). La deuxième rotule (2b) comprend un passage (72b) de fluide la traversant parallèlement à son axe longitudinal.

Un deuxième système (6b) d'étanchéité est disposé dans un deuxième plan diamétral du volume intérieur de la deuxième douille (1 b). Par exemple, le deuxième plan diamétral peut passer par le centre de la deuxième rotule (2b). Le deuxième plan diamétral peut aussi être décalé par rapport au centre de la deuxième rotule (2b).

Les systèmes (6a, 6b) d'étanchéité peuvent être agencés selon les exemples donnés pour le premier mode de réalisation.

Les passages (71 b) de fluide de la première (1a) et de la deuxième douille (1 b) et les passages (72b) de fluide de la première rotule (2a) et de la deuxième (2b) rotule coopèrent entre eux pour définir un conduit de fluide à travers le joint articulé (02) quelles que soient leurs orientations respectives.

La première rotule (2a) est reliée par l'intermédiaire d'un premier ensemble comprenant une ou plusieurs biellettes (40a) s'articulant en rotation sur un ou plusieurs premiers pivots (30a) formés sur une extrémité de la première douille pour réaliser une ou plusieurs liaisons pivot. La ou les biellettes (40a) du premier ensemble sont fixées solidairement sur une portion (8) située dans le prolongement de la première rotule (2a) par des moyens de fixation (50a). Ces moyens de fixation (50a) peuvent être, par exemple, des vis. La ou les biellettes (40a) peuvent s'articuler en rotation selon un premier axe (300a) de rotation défini par le ou les premiers pivots (30a). Le premier axe (300a) de rotation est compris dans un premier plan diamétral central passant par le centre de la première rotule (2a). Dans une configuration, le premier plan diamétral et le premier plan diamétral central peuvent être confondus.

La deuxième rotule (2b) est reliée par l'intermédiaire d'un deuxième ensemble comprenant une ou plusieurs biellettes (40b) s'articulant en rotation sur un ou plusieurs deuxièmes pivots (30b) formés sur une extrémité de la deuxième douille (1 b) pour réaliser une ou plusieurs liaisons pivot. La ou les biellettes (40b) du deuxième ensemble sont fixées solidairement sur une portion (8) située dans le prolongement de la deuxième rotule (2b) par des moyens de fixation (50b). Ces moyens de fixation (50b) peuvent être, par exemple, des vis. La ou les biellettes (40b) peuvent s'articuler en rotation selon un deuxième axe (300b) de rotation défini par le ou les deuxièmes pivots (30b). Le deuxième axe (300b) de rotation est compris dans un deuxième plan diamétral central passant par le centre de la deuxième rotule (2b). Dans une configuration, le deuxième plan diamétral et le deuxième plan diamétral central peuvent être confondus.

Le ou les premiers pivots (30a) définissent un axe (300a) de rotation de la première rotule (2b) sensiblement perpendiculaire à l'axe (300b) de rotation de la deuxième rotule (2b) défini par le ou les deuxièmes pivots (30b).

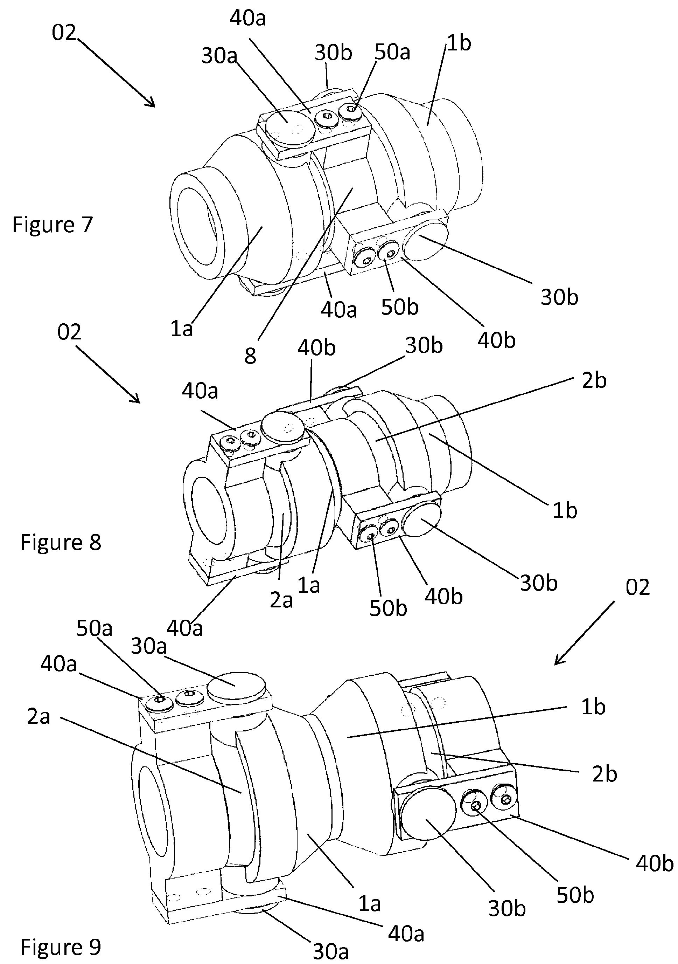

Dans une deuxième configuration du deuxième mode de réalisation (figure 8), une première douille (1a) et une deuxième rotule sont liées l'une à l'autre de telle manière que leurs axes longitudinaux se confondent. La première douille (1a) et la deuxième rotule (2b) peuvent être fixées entre elles ou être réalisées d'une pièce ou être soudées entre elles.

Ainsi, le joint articulé comprend au moins une première douille (1 a), une première rotule (1 b), une deuxième douille (1 b) et une deuxième rotule (2b).

La première douille (1a) comprend un passage (71 a) de fluide la traversant parallèlement à son axe longitudinal.

La première rotule (2a) est disposée dans la première douille (1a) de façon à ce que la première rotule (2a) puisse se déplacer en rotation dans la première douille (1a). La première rotule (2a) comprend un passage (72a) de fluide la traversant parallèlement à son axe longitudinal.

Un premier système (6a) d'étanchéité, tel qu'une bague, est disposé dans un premier plan diamétral du volume intérieur de la première douille (1a). Par exemple, le premier plan diamétral peut passer par le centre de la première rotule (2a). Le premier plan diamétral peut aussi être décalé par rapport au centre de la première rotule (2a).

La deuxième douille (1b) comprend un passage (71 b) de fluide la traversant parallèlement à son axe longitudinal.

La deuxième rotule (2b) est disposée dans la deuxième douille (1 b) de façon à ce que la deuxième rotule (2b) puisse se déplacer en rotation dans la deuxième douille (1 b). La deuxième rotule (2b) comprend un passage (72b) de fluide la traversant parallèlement à son axe longitudinal.

Un deuxième système (6b) d'étanchéité est disposé dans un deuxième plan diamétral du volume intérieur de la deuxième douille (1 b). Par exemple, le deuxième plan diamétral peut passer par le centre de la deuxième rotule (2b). Le deuxième plan diamétral peut aussi être décalé par rapport au centre de la deuxième rotule (2b).

Les systèmes (6a, 6b) d'étanchéité peuvent être agencés selon les exemples donnés pour le premier mode de réalisation.

Les passages (71 a, 71 b) de fluide de la première (1a) et de la deuxième douille (1b) et les passages (72a, 72b) de fluide de la première rotule (2a) et de la deuxième rotule (2b) coopèrent entre eux pour définir un conduit de fluide à travers le joint (02) articulé quelles que soient leurs orientations respectives.

La première rotule (2b) est reliée par l'intermédiaire d'un premier ensemble comprenant une ou plusieurs biellettes (40a) s'articulant en rotation sur un ou plusieurs premiers pivots (30a) formés sur une extrémité de la première douille pour réaliser une ou plusieurs liaisons pivot. La ou les biellettes (40a) du premier ensemble sont fixées solidairement sur une portion située sur le prolongement de la première rotule (2a) par des moyens de fixation (50a). Ces moyens (50a) de fixation peuvent être, par exemple, des vis. La ou les biellettes (40a) peuvent s'articuler en rotation selon un premier axe de rotation défini par le ou les premiers pivots (30a). Le premier axe de rotation est compris dans un premier plan diamétral central passant par le centre de la première rotule (2a). Dans une configuration, le premier plan diamétral et le premier plan diamétral central peuvent être confondus.

La deuxième rotule (2b) est reliée par l'intermédiaire d'un deuxième ensemble comprenant une ou plusieurs biellettes (40b) s'articulant en rotation sur un ou plusieurs deuxièmes pivots (30b). La ou les biellettes (40b) du deuxième ensemble sont fixées solidairement sur une portion située dans le prolongement de la deuxième rotule (2b) par des moyens (50b) de fixation. Ces moyens (50b) de fixation peuvent être, par exemple, des vis. La ou les biellettes (40b) peuvent s'articuler en rotation selon un deuxième axe de rotation défini par le ou les deuxièmes pivots (30b). Le deuxième axe de rotation est compris dans un deuxième plan diamétral central passant par le centre de la deuxième rotule (2b). Dans une configuration, le premier plan diamétral et le premier plan diamétral central peuvent être confondus.

Le ou les premiers pivots (30a) définissent un axe de rotation de la première rotule (2a) sensiblement perpendiculaire à l'axe de rotation de la deuxième rotule (2b) défini par le ou les deuxièmes pivots (30b).

Dans une troisième configuration du deuxième mode de réalisation (figure 9), deux douilles (1 a, 1 b) sont liées l'une à l'autre de telle manière que leurs axes longitudinaux se confondent. Les deux douilles (1a, 1 b) sont tête-bêche l'une de l'autre. Les deux douilles (1a, 1b) peuvent être fixées entre elles ou être réalisées d'une pièce en formant une double douille ou soudées entre elles

Ainsi, le joint articulé (02) comprend au moins une première douille (1a), une première rotule (2a), une deuxième douille (1b) et une deuxième rotule (2b).

La première douille (1a) comprend un passage (71 a) de fluide la traversant parallèlement à son axe longitudinal.

La première rotule (2a) est disposée dans la première douille (1a) de façon à ce que la première rotule (2a) puisse se déplacer en rotation dans la première douille (1a). La première rotule (2a) comprend un passage (72a) de fluide la traversant parallèlement à son axe longitudinal.

Un premier système (6a) d'étanchéité est disposé dans un premier plan diamétral du volume intérieur de la première douille (1a). Par exemple, le premier plan diamétral peut passer par le centre de la première rotule (2a). Le premier plan diamétral peut aussi être décalé par rapport au centre de la première rotule (2a).

La deuxième douille (1b) comprend un passage (71 b) de fluide la traversant parallèlement à son axe longitudinal.

La deuxième rotule (2b) est disposée dans la deuxième douille (1 b) de façon à ce que la deuxième rotule (2b) puisse se déplacer en rotation dans la deuxième douille (1 b). La deuxième rotule (2b) comprend un passage (72b) de fluide la traversant parallèlement à son axe longitudinal.

Un deuxième système (6b) d'étanchéité est disposé dans un deuxième plan diamétral du volume intérieur de la deuxième douille (1 b). Par exemple, le deuxième plan diamétral peut passer par le centre de la deuxième rotule (2b). Le deuxième plan diamétral peut aussi être décalé par rapport au centre de la deuxième rotule (2b).

Les systèmes (6a, 6b) d'étanchéité peuvent être agencés selon les exemples donnés pour le premier mode de réalisation.

Les passages (71 a, 71 b) de fluide de la première (1a) et de la deuxième douille (1b) et les passages (72a, 72b) de fluide de la première rotule (2a) et de la deuxième rotule (2b) coopèrent entre eux pour définir un conduit de fluide à travers le joint articulé (02) quelles que soient leurs orientations respectives.

La première rotule (2a) est reliée par l'intermédiaire d'un premier ensemble comprenant une ou plusieurs biellettes (40a) s'articulant en rotation sur un ou plusieurs premiers pivots (30a) formés sur une extrémité de la première douille pour réaliser une ou plusieurs liaisons pivots. La ou les biellettes (40a) du premier ensemble sont fixées solidairement sur une portion située dans le prolongement de la première rotule (2a) par des moyens (50a) de fixation. Ces moyens (50a) de fixation peuvent être, par exemple, des vis. La ou les biellettes (40a) peut s'articuler en rotation selon un premier axe de rotation défini par le ou les premiers pivots (30a). Le premier axe de rotation est compris dans un premier plan diamétral central passant par le centre de la première rotule (2a). Dans une configuration, le deuxième plan diamétral et le deuxième plan diamétral central peuvent être confondus.

La deuxième rotule (2b) est reliée par l'intermédiaire d'un deuxième ensemble comprenant une ou plusieurs biellettes (40b) s'articulant en rotation sur un ou plusieurs deuxièmes pivots (30b) formés sur une extrémité de la deuxième douille (2b) pour réaliser une ou plusieurs liaisons pivot. La ou les biellettes (40b) du deuxième ensemble sont fixées solidairement sur une portion située dans le prolongement de la deuxième rotule (2b) par des moyens (50b) de fixation. Ces moyens (50b) de fixation peuvent être, par exemple, des vis. La ou les biellettes (40b) peuvent s'articuler en rotation selon un deuxième axe de rotation défini par le ou les deuxièmes pivots (30b). Le deuxième axe de rotation est compris dans un premier plan diamétral central passant par le centre de la deuxième rotule (2b). Dans une configuration, le deuxième plan diamétral et le deuxième plan diamétral central peuvent être confondus.

Le ou les premiers pivots (30a) définissent un axe de rotation de la première rotule (2a) sensiblement perpendiculaire à l'axe de rotation de la deuxième rotule (2b) défini par le ou les deuxièmes pivots (30b).

Le joint articulé (02) du deuxième mode de réalisation peut être utilisé dans un canon à eau type monitor comme joint articulé de sortie du canon à eau. Les extrémités du joint articulé possèdent des moyens de fixation permettant de fixer à une extrémité un corps d'entrée de fluide, tel qu'une conduite de fluide, et, à l'autre extrémité, un conduit pourvu d'une tête de diffusion destinée à projeter un fluide sous pression. La ou les premières liaisons pivot du joint articulé définissent un axe horizontal ou vertical.

Pendant le fonctionnement du canon à eau, par exemple, pour la première configuration du deuxième mode de réalisation, le fluide sous pression tend à dissocier la double rotule (2a, 2b) de la douille (1a) d'entrée et de la douille (1 b) de sortie en créant un effort de traction.

Les biellettes (40a, 40b) liées à la partie (8) intermédiaire entre les deux rotules (2a, 2b) par des vis et en liaisons pivot (30a, 30b) autour des axes définis par les premiers (30a) et deuxièmes (30b) pivots transmettent l'effort de traction à la double rotule, assurant ainsi l'équilibre en termes de force et empêchant la dislocation de l'ensemble.

La double rotule possède deux parties sphériques en ses extrémités. La douille (1a) d'entrée et la douille (1b) de sortie de fluide ont des gorges accueillant un système (6a, 6b) d'étanchéité. Ces gorges sont comprises dans les plans diamétraux intérieurs de leurs douilles respectives. Par exemple, ces gorges peuvent être en outre comprises dans un plan comprenant les axes de rotation définis par les pivots. Les biellettes peuvent être conçues de telle façon que les centres des parties sphériques de la double rotule soient compris sur les axes de rotation définis par les liaisons pivot et par conséquent sur le plan comprenant les systèmes d'étanchéité.

Ainsi, quelles que soient les inclinaisons de la double rotule par rapport aux douilles, les serrages des systèmes d'étanchéité restent constants et les étanchéités assurées.

La présente description détaille différents modes de réalisation et configuration ou variantes en référence à des figures et/ou des caractéristiques techniques. L'homme du métier comprendra que les diverses caractéristiques techniques des divers modes ou configurations peuvent être combinées entre elles pour obtenir d'autres modes de réalisation et de configuration, à moins que l'inverse ne soit explicitement mentionné ou que ces caractéristiques techniques ne soient incompatibles. De même, une caractéristique technique d'un mode de réalisation ou d'une configuration peut être isolée des autres caractéristiques techniques de ce mode de réalisation à moins que l'inverse ne soit mentionné. Dans la présente description, de nombreux détails spécifiques sont fournis à titre illustratif et nullement limitatif, de façon à détailler précisément l'invention. L'homme de métier comprendra cependant que l'invention peut être réalisée en l'absence d'un ou plusieurs de ces détails spécifiques ou avec des variantes. À d'autres occasions, certains aspects ne sont pas détaillés de façon à éviter d'obscurcir et alourdir la présente description et l'homme de métier comprendra que des moyens divers et variés pourront être utilisés et que l'invention n'est pas limitée aux seuls exemples décrits.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Joint articulé d'une conduite de fluide comprenant au moins :
- une première douille (1, 1a) comportant un passage de fluide la traversant parallèlement à son axe longitudinal et se prolongeant sur une extrémité à l'intérieur par une forme accueillant le diamètre d'une première rotule (2, 2a),
- la première rotule (2, 2a) disposée dans la première douille (1, 1a) de façon à ce que la première rotule (2, 2a) puisse se déplacer en rotation dans la première douille (1, 1a), la première rotule (2, 2a) comportant un passage de fluide la traversant parallèlement à son axe longitudinal,
le passage de fluide de la première douille (1, 1a) et le passage de fluide de la première rotule (2, 2a) coopérant pour définir un passage de fluide à travers le joint quelles que soient leurs orientations respectives,
le joint comprenant en outre :
- un système d'étanchéité disposé dans un plan (P) diamétral du volume intérieur de la première douille (1, 1a),
- au moins une première biellette fixée solidairement selon une direction sur une portion située dans le prolongement de la première rotule (2, 2a), la première biellette s'articulant en rotation sur un premier pivot formé sur une extrémité de la première douille (1, 1a) pour réaliser une première liaison pivot,
le joint étant **caractérisé en ce que** la première rotule (2, 2a) a une surface sphérique de diamètre constant s'étendant de part et d'autre d'un plan diamétral passant par le centre de la première rotule (2, 2a).

2. Joint selon la revendication 1, **caractérisé en ce que** la première douille (1, 1a) est en amont de la première rotule (2, 2a) dans le sens de circulation du fluide.

3. Joint selon la revendication 1, **caractérisé en ce que** la première douille (1, 1a) est en aval de la première rotule (2, 2a) dans le sens de circulation du fluide.

4. Joint selon la revendication 1, **caractérisé en ce que** le plan (P) diamétral du volume intérieur de la première douille (1, 1a) passe par le centre de la première rotule (2, 2a).

5. Joint selon la revendication 1, **caractérisé en ce que** le joint comprend une deuxième biellette fixée solidairement selon une direction sur une portion située dans le prolongement de la première rotule (2, 2a), la deuxième biellette s'articulant en rotation sur un deuxième pivot formé sur une extrémité de la première douille (1, 1a) pour réaliser une deuxième liaison pivot, le deuxième pivot étant aligné coaxialement avec le premier pivot, le deuxième pivot étant diamétralement opposé au premier pivot.

6. Joint selon la revendication 5, **caractérisé en ce que** la première et/ou la deuxième liaison pivot est un tenon formé sur la première douille (1, 1a).

7. Joint articulé selon la revendication 5, **caractérisé en ce que** la première et/ou la deuxième liaison pivot est un tourillon.

8. Joint articulé selon la revendication 5, **caractérisé en ce que** la première et/ou la deuxième liaison pivot sont un ou des trous borgnes formés dans la douille (1, 1a) recevant un ou des tenons formé sur au moins une biellette.

9. Joint articulé pour conduite de fluide selon la revendication 1 ou 5, comprenant un conduit, **caractérisé en ce qu'**il comprend en outre :
- une deuxième douille (1b) comprenant un passage de fluide la traversant parallèlement à son axe longitudinal,
- un système d'étanchéité disposé dans un plan diamétral du volume intérieur de la deuxième douille (1b),
- une deuxième rotule (2b) disposée dans la deuxième douille (1b) de façon à ce que la deuxième rotule (2b) puisse se déplacer en rotation dans la deuxième douille (1b), la deuxième rotule (2b) comprenant un passage de fluide la traversant parallèlement à son axe longitudinal,
les passages de fluide de la première et de la deuxième douille (1a, 1b) et les passages de fluide de la première rotule (1b) et de la deuxième rotule (2b) coopérant entre eux pour définir un passage de fluide à travers le joint quelles que soient leurs orientations respectives,
au moins un deuxième ensemble comprenant une ou plusieurs biellettes fixées solidairement selon une direction sur une portion située dans le prolongement de la deuxième rotule (2b), la ou les biellettes s'articulant en rotation sur un ou plusieurs pivots formés sur une extrémité de la deuxième douille (1 b) pour réaliser une ou plusieurs liaison pivot,
le ou les premiers pivots définissant un axe de rotation sensiblement perpendiculaire à un axe de rotation défini par le ou les deuxièmes pivots.

10. Joint selon la revendication 9, **caractérisé en ce que** la première rotule (2a) et la deuxième rotule (2b) sont solidaires entre elles ou réalisées en une seule pièce de telle manière que les têtes de rotule sont dans des sens opposés.

11. Joint selon la revendication 9, **caractérisé en ce que** la première douille (1a) et la deuxième rotule (2b) sont solidaires entre elles ou réalisées en une seule pièce de telle manière que les têtes de rotule sont dans le même sens.

12. Joint selon la revendication 9, **caractérisé en ce que** la première douille (1a) et la deuxième douille (1b) sont solidaires entre elles et tête-bêche et accueillent chacune à l'extrémité libre une rotule à l'intérieur et comportent chacune deux tenons ou trous borgnes, la paire de tenons ou trous borgnes d'une douille étant disposée selon une direction perpendiculaire à la paire de tenons ou de trous borgnes de l'autre douille.

13. Joint selon la revendication 9, **caractérisé en ce que** le plan diamétral du volume intérieur de la première douille (1a) et/ou le plan diamétral du volume intérieur de la deuxième douille (1b) passe respectivement par le centre de la première rotule (2a) et/ou de la deuxième rotule (2b).

14. Canon à eau de type monitor ayant au moins un joint de sortie selon la revendication 9.

15. Canon selon la revendication 14, **caractérisé en ce que** la ou les premières liaisons définissent un axe de rotation horizontal.

16. Canon selon la revendication 14, **caractérisé en ce que** la ou les premières liaisons définissent un axe de rotation vertical.

## Patentansprüche

1. Drehgelenk einer Fluidleitung mit mindestens:
- einer ersten Hülse (1, 1a), die einen Fluiddurchlass aufweist, welcher diese parallel zu ihrer Längsachse durchdringt, und die sich an einem Ende im Inneren durch eine Form, die den Durchmesser eines ersten Kugelkopfes (2, 2a) aufnimmt, verlängert,
- dem ersten Kugelkopf (2, 2a), der innerhalb der ersten Hülse (1, 1a) so angeordnet ist, dass sich der erste Kugelkopf (2, 2a) rotierend in der ersten Hülse (1, 1a) bewegen kann, wobei der erste Kugelkopf (2, 2a) einen Fluiddurchlass, welcher diesen parallel zu seiner Längsachse durchdringt, enthält,
wobei der Fluiddurchlass der ersten Hülse (1, 1a) und der Fluiddurchlass des ersten Kugelkopfes (2, 2a) zusammenwirken, um einen Fluiddurchlass durch das Gelenk,
unabhängig von ihren jeweiligen Orientierungen, zu definieren,
wobei das Gelenk außerdem enthält:
- ein Dichtungssystem, das in einer diametralen Ebene (P) des Innenraums der ersten Hülse (1, 1a) angeordnet ist,
- mindestens einen ersten Schwingarm, der mit einem Abschnitt, welcher in der Verlängerung des ersten Kugelkopfes (2, 2a) liegt, in einer Richtung fest verbunden ist, wobei der erste Schwingarm sich um einen Drehpunkt, der an einem Ende der ersten Hülse (1, 1a) gebildet ist, rotierend bewegt, um eine erste Drehverbindung zu bilden,
wobei das Gelenk **dadurch gekennzeichnet ist, dass** der erste Kugelkopf (2, 2a) eine sphärische Oberfläche mit konstantem Durchmesser aufweist, die sich beidseitig einer diametralen Ebene, welche durch die Mitte des ersten Kugelkopfes (2, 2a) verläuft, erstreckt.

2. Gelenk nach Anspruch 1, **dadurch gekennzeichnet, dass** die erste Hülse (1, 1a) dem ersten Kugelkopf (2, 2a) in der Fluidzirkulationsrichtung vorgeschaltet ist.

3. Gelenk nach Anspruch 1, **dadurch gekennzeichnet, dass** die erste Hülse (1, 1a) dem ersten Kugelkopf (2, 2a) in der Fluidzirkulationsrichtung nachgeschaltet ist.

4. Gelenk nach Anspruch 1, **dadurch gekennzeichnet, dass** die diametrale Ebene (P) des Innenraums der ersten Hülse (1, 1a) durch die Mitte des ersten Kugelkopfes (2, 2a) verläuft.

5. Gelenk nach Anspruch 1, **dadurch gekennzeichnet, dass** das Gelenk einen zweiten Schwingarm enthält, welcher auf einem Abschnitt, der in der Verlängerung des ersten Kugelkopfes (2, 2a) liegt, in einer Richtung fest verbunden ist, wobei der zweite Schwingarm sich um einen zweiten Drehpunkt, der an einem Ende der ersten Hülse (1, 1a) gebildet ist, rotierend bewegt, um eine zweite Drehverbindung zu bilden, wobei der zweite Drehpunkt koaxial zu dem ersten Drehpunkt ausgerichtet ist, wobei der zweite Drehpunkt dem ersten Drehpunkt diametral gegenüber liegt.

6. Gelenk nach Anspruch 5, **dadurch gekennzeichnet, dass** die erste und/oder zweite Drehverbindung aus einem Zapfen besteht, welcher an der ersten Hülse (1, 1a) gebildet ist.

7. Drehgelenk nach Anspruch 5, **dadurch gekennzeichnet, dass** die erste und/oder zweite Drehverbindung aus einem Drehzapfen besteht.

8. Drehgelenk nach Anspruch 5, **dadurch gekennzeichnet, dass** die erste und/oder zweite Drehverbindung aus einem oder mehreren Sacklöchern, die in der Hülse gebildet sind, bestehen, wobei die Sacklöcher einen oder mehrere zapfen, die auf wenigstens einem Schwingarm angebracht sind, aufnehmen.

9. Drehgelenk zur Fluidleitung nach Anspruch 1 oder 5 mit einer Leitung, **dadurch gekennzeichnet, dass** das Drehgelenk außerdem enthält:
- eine zweite Hülse (1b), die einen Fluiddurchlass, welcher diese parallel zu ihrer Längsachse durchdringt, enthält,
- ein Dichtungssystem, das in einer diametralen Ebene des Innenraums der zweiten Hülse (1b) angeordnet ist,
- einen zweiten Kugelkopf (2b), der in der zweiten Hülse (1b) so angeordnet ist, dass der zweite Kugelkopf (2b) sich rotierend in der zweiten Hülse (1b) bewegen kann, wobei der zweite Kugelkopf (2b) einen Fluiddurchlass, welcher diesen parallel zu seiner Längsachse durchdringt, enthält,
wobei die Fluiddurchlässe der ersten und der zweiten Hülse (1a, 1b) und die Fluiddurchlässe des ersten Kugelkopfes (1b) und des zweiten Kugelkopfes (2b) zusammenwirken, um einen Fluiddurchlass durch das Gelenk unabhängig von deren jeweiligen Orientierungen zu definieren,
mindestens eine zweite Einheit mit einem oder mehreren Schwingarmen, die mit einem Abschnitt in der Verlängerung des zweiten Kugelkopfes (2b) in einer Richtung fest verbunden sind, wobei der oder die Schwingarme sich rotierend um einen oder mehrere Drehpunkte, die an einem Ende der zweiten Hülse (1b) angebracht sind, bewegen, um eine oder mehrere Drehverbindungen zu bilden,
wobei der erste oder die ersten Drehpunkte eine Drehachse definieren, welche im Wesentlichen senkrecht zu einer Drehachse, die durch den oder die zweiten Drehpunkte definiert ist, ist.

10. Gelenk nach Anspruch 9, **dadurch gekennzeichnet, dass** der erste Kugelkopf (2a) und der zweite Kugelkopf (2b) miteinander fest verbunden sind oder aus einem Stück ausgebildet sind, so dass die Kugelköpfe in entgegengesetzte Richtungen zeigen.

11. Gelenk nach Anspruch 9, **dadurch gekennzeichnet, dass** die erste Hülse (1a) und der zweite Kugelkopf (2b) miteinander fest verbunden sind oder aus einem Stück ausgebildet sind, so dass die Kugelköpfe in die gleiche Richtung zeigen.

12. Gelenk nach Anspruch 9, **dadurch gekennzeichnet, dass** die erste Hülse (1a) und die zweite Hülse (1b) miteinander fest verbunden sind und entgegengesetzt angeordnet sind, und dass jede Hülse an ihrem freien Ende im Inneren einen Kugelkopf aufnimmt und zwei Zapfen oder Sacklöcher enthält, wobei das Paar Zapfen oder Sacklöcher einer Hülse in einer Richtung senkrecht zum Paar Zapfen oder Sacklöcher der anderen Hülse angeordnet ist.

13. Gelenk nach Anspruch 9, **dadurch gekennzeichnet, dass** die diametrale Ebene des Innenraums der ersten Hülse (1a) und/oder die diametrale Ebene des Innenraums der zweiten Hülse (1b) jeweils durch die Mitte des ersten Kugelkopfes (2a) und/oder des zweiten Kugelkopfes (2b) verläuft.

14. Wasserwerfer vom Typ Monitor mit mindestens einem Ausgangsgelenk nach Anspruch 9.

15. Werfer nach Anspruch 14, **dadurch gekennzeichnet, dass** die erste oder die ersten Verbindungen eine horizontale Drehachse definieren.

16. Werfer nach Anspruch 14, **dadurch gekennzeichnet, dass** die erste oder die ersten Verbindungen eine vertikale Drehachse definieren.

## Claims

1. Articulated joint of a fluid conduit comprising at least
- a first socket (1, 1a) which includes a passage for fluid passing through it parallel to its longitudinal axis and is extended over one end internally by a shape accommodating the diameter of a first ball (2, 2a),
- the first ball (2, 2a) being disposed in the first socket (1, 1a) in such a way that the first ball (2. 2a) can move in rotation in the first socket (1, 1a), the first ball (2, 2a) comprising a passage for fluid passing through it parallel to its longitudinal axis,
the fluid passage of the first socket (1, 1 a) and the fluid passage of the first ball (2, 2a) co-operating in order to define a fluid passage through the joint regardless of the respective orientation thereof, the joint further comprising
- a sealing system disposed in a diametral plane (P) of the internal volume of the first socket (1, 1a),
- at least one first connecting rod fixed integrally in one direction over a portion situated in the extension of the first ball (2, 2a), the first connecting rod being articulated rotatably on a first pivot formed on one end of the first socket (1, 1a) in order to achieve a first pivot connection,
the joint being **characterised in that** the first ball (2, 2a) has a spherical surface of constant diameter extending on both sides of a diametral plane passing through the centre of the first ball (2, 2a).

2. Joint according to claim 1, **characterised in that** the first socket (1, 1a) is upstream of the first ball (2, 2a) in the direction of circulation of the fluid.

3. Joint according to claim 1, **characterised in that** the first socket (1, 1a) is downstream of the first ball (2, 2a) in the direction of circulation of the fluid.

4. Joint according to claim 1, **characterised in that** the diametral plane (P) of the internal volume of the first socket (1, 1a) passes through the centre of the first ball (2, 2a).

5. Joint according to claim 1, **characterised in that** the joint comprises a second connecting rod fixed integrally in one direction over a portion situated in the extension of the first ball (2, 2a), the second connecting rod being articulated rotatably on a second pivot formed on one end of the first socket (1, 1 a) in order to achieve a second pivot connection, the second pivot being aligned coaxially with the first pivot, the second pivot being diametrally opposite the first pivot.

6. Joint according to claim 5, **characterised in that** the first and/or the second pivot connection is a lug formed on the first socket (1, 1a).

7. Joint according to claim 5, **characterised in that** the first and/or the second pivot connection is a journal.

8. Joint according to claim 5, **characterised in that** the first and/or the second pivot connection is a one or more blind holes formed in the socket (1, 1a) receiving one or more of the lugs formed on at least one connecting rod.

9. Articulated joint for a fluid conduit according to claim 1 or 5, comprising a duct, **characterised in that** it also comprises
- a second socket (1b) comprising a passage for fluid passing through it parallel to its longitudinal axis,
- a sealing system disposed in a diametral plane (P) of the internal volume of the second socket (1b),
- the first ball (2, 2b) being disposed in the second socket (1b) in such a way that the second ball (2b) can move in rotation in the second socket (1 b), the second ball (2, 2b) comprising a passage for fluid passing through it parallel to its longitudinal axis,
the fluid passages of the first and the second socket (1 a, 1 b) and the fluid passages of the first ball (1b) and of the second ball (1 b) co-operating with one another in order to define a fluid passage through the joint regardless of the respective orientations thereof,
- at least one second assembly comprising one or more connecting rods fixed integrally in one direction over a portion situated in the extension of the second ball (2b), the connecting rod or rods being articulated rotatably on one or more pivots formed on one end of the second socket (1 b) in order to achieve one or more pivot connections,
the first pivot or pivots defining an axis of rotation substantially perpendicular to an axis of rotation defined by the second pivot or pivots.

10. Joint according to claim 9, **characterised in that** the first ball (2a) and the second ball (2b) are integral with one another or produced in one single piece in such a way that the ball heads are in opposite directions.

11. Joint according to claim 9, **characterised in that** the first socket (1a) and the second ball (2b) are integral with one another or produced in one single piece in such a way that the ball heads are in the same direction.

12. Joint according to claim 9, **characterised in that** the first socket (1a) and the second socket (1 b) are integral with one another and head to tail and each accommodate at the free end an internal ball and each comprise two lugs or blind holes, the pair of lugs or blind holes of a socket being disposed in a direction perpendicular to the pair of lugs or of blind holes of the other socket.

13. Joint according to claim 9, **characterised in that** the diametral plane of the internal volume of the first socket (1a) and/or the diametral plane of the internal volume of the second socket (1b) pass respectively through the centre of the first ball (2a) and/or of the second ball (2b).

14. Water cannon of the monitor type, having at least one outlet joint according to claim 9.

15. Cannon according to claim 14, **characterised in that** the first connection or connections define a horizontal axis of rotation.

16. Cannon according to claim 14, **characterised in that** the first connection or connections define a vertical axis of rotation.
